# EUROPEAN PATENT SPECIFICATION

(11) **EP 2 494 687 B1**
(45) Date of publication and mention of the grant of the patent: **01.08.2018**
(21) Application number: 09740904.9
(22) Date of filing: 29.10.2009
(51) Int. Cl.: H02M 1/34, H02M 7/797, H02M 7/48, H02M 7/483, H02M 1/00

(54) **HIGH VOLTAGE AC-DC CONVERTER**
AC-DC UMRICHTER FÜR HOHE SPANNUNGEN
CONVERTISSEUR CA-CC DE HAUTE TENSION

(43) Date of publication of application: 05.09.2012
(73) Proprietor: General Electric Technology GmbH, 5400 Baden (CH)
(72) Inventor: TRAINER, David, Alvaston, Derbyshire DE24 0AG (GB); CROOKES, William, Salt - Salford ST18 0BW (GB); OATES, Colin, Donald, Murray, Stafford, Staffordshire ST17 4LX (GB)
(74) Representative: Fischer, Michael Maria
(86) International application number: PCT/EP2009/064295
(87) International publication number: WO 2011/050847

(56) References cited:
- WO-A1-02/063758
- WO-A1-02/084851
- WO-A1-02/084856
- OATES, C.: "A methodology for developing 'Chain link' converters" PROC. OF 13TH EUROPEAN POWER ELECTRONICS AND APPLICATIONS CONFERENCE,EPE 2009, 8 September 2009 (2009-09-08), - 10 September 2009 (2009-09-10) pages 1-10, XP002604858 ISBN: 978-1-4244-4432-8

## Description

The invention relates to a voltage source converter for use in high voltage direct current (HVDC) power transmissions and reactive power compensation.

In power transmission networks alternating current (AC) power is typically converted to direct current (DC) power for transmission via overhead lines and/or undersea cables. This conversion removes the need to compensate for the AC capacitive load effects imposed by the transmission line or cable, and thereby reduces the cost per kilometer of the lines and/or cables. Conversion from AC to DC thus becomes cost-effective when power needs to be transmitted over a long distance.

The conversion of AC to DC power is also utilized in power transmission networks where it is necessary to interconnect the AC networks operating at different frequencies.

In any such power transmission network, converters are required at each interface between AC and DC power to effect the required conversion, and one such form of converter is a voltage source converter (VSC).

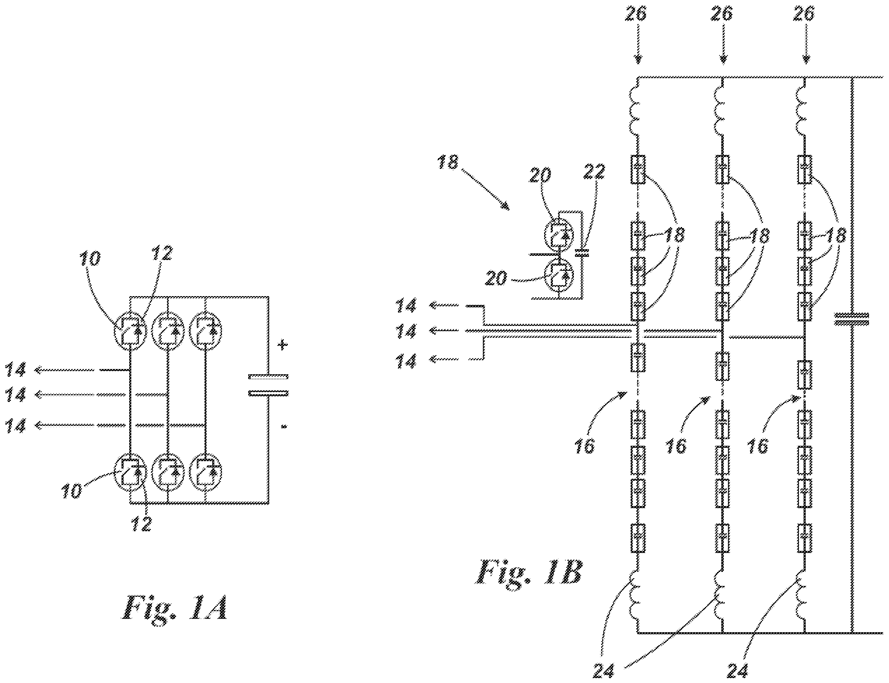

One form of known voltage source converter is shown in Figure 1A and includes six sets of series connected insulated gate bipolar transistors (IGBTs) 10 and anti-parallel diodes 12. The IGBTs 10 are connected and switched together in series to enable high power ratings of 10's to 100's of MW to be realized.

This approach however requires a complex and active IGBT drive, and requires large passive snubber components to ensure that the high voltage across the series strings of IGBTs 10 shares properly during converter switching. In addition the IGBTs 10 need to switch on and off several times at high voltage over each cycle of the AC supply frequency to control the harmonic currents being fed to the AC network 14. These factors lead to high losses, high levels of electromagnetic interference and a complex design.

Another known voltage source converter is shown in Figure 1b and includes a multilevel converter arrangement. The multilevel converter arrangement includes converter bridges 16 of cells 18 connected in series, each converter cell 18 including a pair of series connected IGBTs 20 connected in parallel with a capacitor 22. Each converter cell 18 is switched at a different time and such an arrangement eliminates the problems associated with the direct switching of series connected IGBTs 20 because the individual converter cells 18 do not switch simultaneously and converter steps are comparatively small.

The capacitor 22 of each converter cell 18 must however have a high capacitive value to constrain the voltage variation at the capacitor terminals in the multilevel converter arrangement. Six DC side reactors 24 are also required to enable the parallel connection and operation of the converter limbs 26, and are primarily used to limit transient current flow between converter limbs 26.

These factors lead to expensive, large and heavy equipment with significant amounts of stored energy, making pre-assembly, testing and transportation of the equipment difficult.

WO 02/084851 discloses an ARCP-circuit (Auxiliary Resonant Commutation Pole) comprising at least one auxiliary valve forming a bidirectional switch structure.

The article "A methodology for developing 'chain link' converters" of Oates C., Proc. of European power electronics and applications, 8 September 2009, relates to a control methodology for chainlink converters.

WO 02/063758 concerns a converter apparatus and a method for the control thereof.

WO 02/084856 relates to a VSC-converter for converting direct voltage into auxiliary voltage and vice versa.

The problems are solved by an apparatus defined in the independent claim 1.

All the technical features of the independent claim are mandatory and not optional, irrespective of any statements to the contrary in the following passages.

Preferred embodiments are described by the dependent claims.

The use of a plurality of modules connected in series allows the DC side chain-link converter to provide a voltage that may be increased in incremental steps by the insertion of additional modules into the chain so as to provide a voltage that is higher than the voltage provided by each of the individual modules. This arrangement therefore allows the voltage provided by the DC side chain-link converter to be varied so as to control the voltage at the AC terminal, and thereby control the voltage experienced by the switching elements in the respective limb portions. This reduces the risk of damage caused by voltage levels exceeding the voltage ratings of the switches. In addition, the voltage source converter is easier to design and manufacture because the switching elements can be chosen without having to consider the possibility of voltage levels exceeding the voltage ratings of the switching elements.

The third DC terminal is preferably connected in use to ground.

Preferably the voltage source converter includes at least one DC link capacitor connected in series between the third DC terminal and each of the first and second DC terminals.

Such an arrangement provides a mechanism to maintain the voltage balance between the modules of the chain-link converter when either of the limb portions is switched into circuit and the respective DC link capacitor is connected in parallel with the chain-link converter.

In embodiments of the invention the DC side chain-link converter is operable to control the rate of change of voltage at the AC terminal between switching of the DC side chain-link converter out of circuit with one of the limb portions and into circuit with the other of the limb portions.

Operation of the DC side chain-link converter to control the rate of change of voltage at the AC terminal prevents the voltage at the AC terminal from ramping too quickly between different voltage levels and thereby avoids the occurrence of fast fronted and high voltage spikes that may otherwise damage or degrade components or their insulation.

Preferably the DC side chain-link converter is operable prior to being switched out of circuit with one of the limb portions and into circuit with the other of the limb portions to modify the voltage at the AC terminal so as to minimize the voltage across the other limb portion when the DC side chain-link converter is switched into circuit with the other limb portion.

This feature is advantageous in that it allows the switching elements of the limb portion to switch at near zero voltage and thereby minimise switching losses.

The DC side chain-link converter is preferably operable when switched into circuit with one of the limb portions to present a voltage across the limb portion to block current flow through the DC side chain-link converter.

In such an arrangement, the DC side chain-link converter is only required to conduct for relatively short periods of time so as to enable soft-switching of the switching elements of the limb portions. As a result, the overall plant rating may be reduced by optimising the DC side chain-link converter for this specific task.

In such embodiments the AC side chain-link converter may be operable to modify the voltage waveform at the AC terminal to present a near approximation of a sinusoidal waveform to the AC network.

The inclusion of an AC side chain-link converter reduces the possibility of high voltage switching spikes at the interface between the AC side chain-link converter and the AC network by smoothing the edges of the AC terminal voltage waveform and thereby further reducing the rate of change of voltage.

In such embodiments the AC side chain-link converter may be operable to generate a voltage to oppose the flow of current created by a fault in the DC network.

The modules of the AC side chain-link converter may be switched into circuit to provide the opposing voltage required to extinguish the fault current and thereby prevent damage to the voltage source converter components.

In other such embodiments the or each AC side chain-link converter, the or each DC side chain-link converter and/or the or each switching element of each limb portion may be operable to generate a voltage to oppose the flow of current created by a fault in the AC network.

The use of the voltage source converter components to carry out both voltage conversion and extinguishment of fault currents eliminates the need for the installation of separate protective circuit equipment, such as a circuit breaker. This leads to savings in terms of hardware size, weight and costs.

Preferably each module of the or each chain-link converter includes at least one pair of secondary switching elements connected in parallel with an energy storage device, the secondary switching elements being operable so that the chain of modules defines a stepped variable voltage source.

In such embodiments each module may include two pairs of secondary switching elements connected in parallel with the respective energy storage device in a full-bridge arrangement to define a 4-quadrant bipolar module that can provide positive or negative voltage and can conduct current in both directions.

The ability of a 4-quadrant bipolar module to provide positive or negative voltages means that the voltage across the or each chain-link converter may be built up from a combination of modules providing positive or negative voltages. The energy levels in the individual energy storage devices may be maintained therefore at optimal levels by controlling the modules to alternate between positive or negative voltage.

The use of full-bridge 4-quadrant bipolar modules in any AC side chain-link converter means that each of the modules is capable of conducting alternating current such that the AC side chain-link converter is able to modify the voltage waveform at the AC terminal for presentation to the AC network.

In embodiments of the invention in which each module includes an energy storage device, the energy storage device may be provided in the form of a capacitor, fuel cell, battery or an auxiliary AC generator with an associated rectifier.

Such flexibility is useful in the design of converter stations in different locations where the availability of equipment may vary due to locality and transport difficulties. For example, the energy storage device of each module on an offshore wind farm may be provided in the form of an auxiliary AC generator connected to a wind turbine.

The or each switching element of each limb portion preferably includes at least one semiconductor device, which may be provided in the form of an insulated gate bipolar transistor, field-effect transistor, gate turn-off thyristor or integrated gate-commutated transistor.

Preferably the or each chain-link converter includes at least one semiconductor device, which may be provided in the form of an insulated gate bipolar transistor, field-effect transistor, gate turn-off thyristor or integrated gate-commutated transistor.

The use of semiconductor devices is advantageous because such devices are small in size and weight and have relatively low power dissipation, which minimises the need for cooling equipment. It therefore leads to significant reductions in power converter cost, size and weight.

In embodiments of the invention the voltage source converter may include a plurality of converter limbs, each converter limb including an AC terminal for connection to a phase of a multiphase AC network.

In such voltage source converters, the series connection of the switching elements of each converter limb and the DC side chain-link converter connected to the respective AC terminal operates independently of that of the other converter limbs and therefore only affects the phase connected to the respective AC terminal, and has no influence on the phases connected to the AC terminals of the other converter limbs. In the following description the term "embodiment" may have been used for subject-matter that is not part of the invention as defined by the appended independent claim 1.

Only those examples that comprise all the features of independent claim 1 are part of the invention and thus embodiments of the invention.

Parts of the subject-matter of the description not covered by the claims constitutes background art or examples useful for understanding the invention.

Preferred embodiments of the invention will now be described, by way of non-limiting examples, with to the accompanying drawings in which:
Figures 1A and 1B show, in schematic form, prior art voltage source converters;
Figure 2 shows a voltage source converter according to a first example not falling in the scope of the claims;
Figure 3 shows a synthesis of a 50 Hz sinusoidal waveform by a chain-link converter;
Figures 4A to 4E show the different states of the voltage source converter during the generation of a voltage waveform;
Figure 5 shows a square and a trapezoidal voltage waveform;
Figure 6 shows a voltage source converter according to embodiment of the invention;
Figure 7 shows a three-phase voltage source converter; and
Figure 8 shows the operation of the voltage source converter in the event of a fault in the DC network.

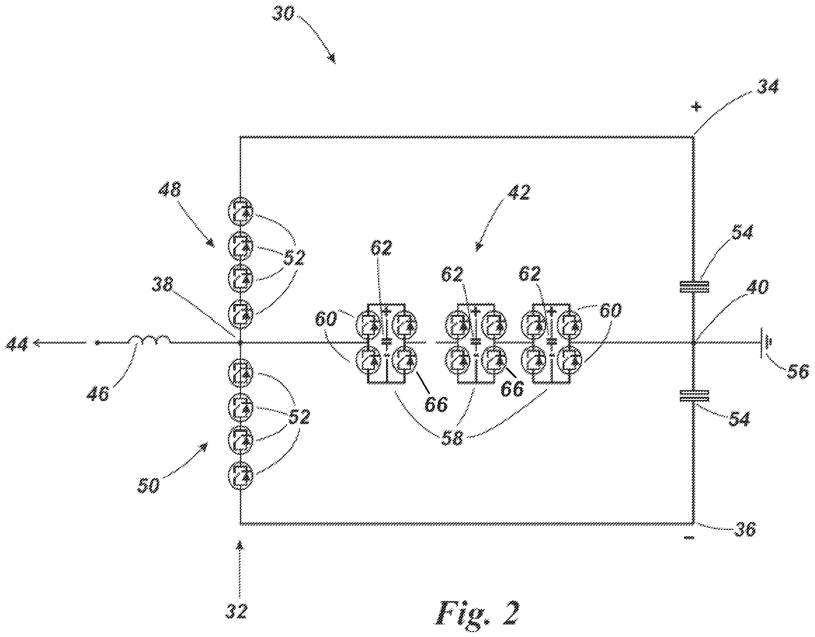

A voltage source converter 30 according to an example not falling under the scope of the claims is shown in Figure 2.

The voltage source converter 30 includes a converter limb 32 including first and second DC terminals 34,36 and an AC terminal 38, a third DC terminal 40 and a DC side chain-link converter 42.

In use, the first DC terminal 34 is connected to a positive terminal of a DC network which carries a voltage of +V_{DC}/2, where V_{DC} is the DC voltage range of the DC network. The second DC terminal 36 is connected to a negative terminal of a DC network which carries a voltage of -V_{DC}/2.

In use the AC terminal 38 is connected to an AC network 44 via an inductor 46. In other embodiments the AC terminal 38 may be connected to the AC network 44 via one or more transformers and/or one or more additional inductors 46.

The converter limb 32 includes first and second limb portions 48,50, each limb portion 48,50 includes a plurality of switching elements 52 connected in series between a respective one of the first and second DC terminals 34,36 and the AC terminal 38. The switching elements 52 of the first and second limb portions 48,50 are operable to switch the respective limb portions 48,50 into and out of circuit to generate a voltage waveform at the AC terminal 38.

In the example of Figure 2, two DC link capacitors 54 are connected in series between the first and second DC terminals 34,36, a junction between the two DC link capacitors 54 defining the third DC terminal 40. The third DC terminal 40 may be connected in use to ground 56 or may be left floating.

The DC side chain-link converter 42 is connected in series between the AC terminal 38 and the third DC terminal 40. The DC side chain-link converter 42 includes a chain of modules 58 connected in series, each module 58 including two pairs of secondary switching elements 60 connected in parallel with a capacitor 62 in a full-bridge arrangement to form a 4-quadrant bipolar module 58 that can provide positive, zero or negative voltage, and can conduct current in both directions.

The ability of a 4-quadrant bipolar module 58 to provide positive or negative voltages means that the voltage across each chain-link converter may be built up from a combination of modules 58 providing positive or negative voltages. The energy levels in the individual energy storage devices may be maintained therefore at optimal levels by controlling the modules 58 to alternate between providing positive or negative voltage.

The secondary switching elements 60 are operable so that the chain of modules 58 provides a stepped variable voltage source, and are switched at near to the fundamental frequency of the AC network 44.

It is envisaged that in other embodiments, the capacitor 62 of each of the modules 58 may be replaced by a different energy storage device such as a fuel cell, a battery or an auxiliary AC generator with an associated rectifier.

The capacitor 62 of each module 58 may be bypassed or inserted into the chain-link converter by changing the state of the secondary switching elements 60.

A capacitor 62 of a module 58 is bypassed when a pair of secondary switching elements 60 is configured to form a short circuit in the module 58, causing the current in the voltage source converter 30 to pass through the short circuit and bypass the capacitor 62.

A capacitor 62 of a module 58 is inserted into the chain-link converter when the pair of secondary switching elements 60 is configured to allow the converter current to flow into and out of the capacitor 62, which is then able to charge or to discharge its stored energy and provide a voltage.

It is therefore possible to build up a combined voltage across the chain-link converter which is higher than the voltage available from each of the individual modules 58 via the insertion of the capacitors 62 of multiple modules 58, each providing its own voltage, into the chain-link converter.

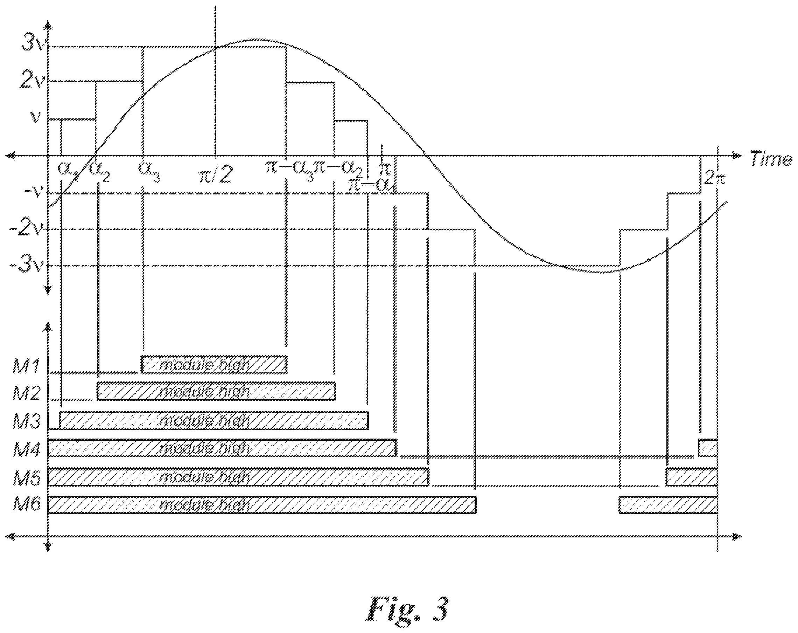

It is also possible to vary the timing of switching operations for each module 58 such that the insertion and/or bypass of the capacitors 62 of individual modules 58 in the chain-link converter results in the generation of a voltage waveform. An example of a voltage waveform generated using the chain-link converter is shown in Figure 3, in which the insertion of the capacitors 62 of the individual modules 58 is staggered to generate a 50Hz sinusoidal waveform. Other waveform shapes may be generated by adjusting the timing of switching operations for each module 58 in the chain-link converter.

In the example shown in Figure 2, each switching element 52, 60 includes an insulated gate bipolar transistor accompanied by a reverse-parallel connected diode 66.

In other examples each switching element 52, 60 may include a different semiconductor switch, such as a field effect transistor, gate-turn-off thyristor, integrated gate-commutated transistor or other forced commutated or self commutated semiconductor switches, accompanied by a reverse-parallel connected diode.

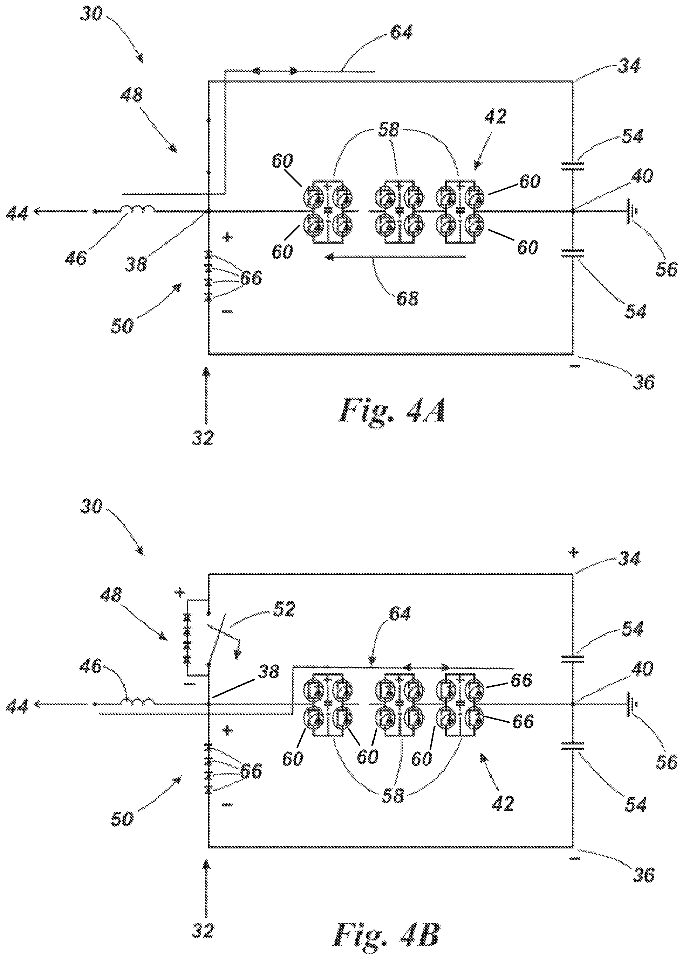

When the first limb portion 48 is switched into circuit as shown in Figure 4A, the switching elements 52 in the first limb portion 48 are closed while the switching elements 52 in the second limb portion 50 are open. Current 64 is prevented from flowing into the second limb portion 50 as a result of the reverse-parallel connected diodes 66 of the second limb portion 50 being reverse-biased. At this point some or all of the secondary switching elements 60 of the modules 58 of the DC side chain-link converter 42 are switched off and the DC side chain-link converter 42 provides a voltage 68 that slightly exceeds +V_{DC}/2. This prevents a current 64 flowing through the DC side chain-link converter 42 by causing the reverse-parallel connected diodes of the secondary switching elements 60 to be reverse-biased. The switching of the first limb portion 48 into circuit connects the first DC terminal 34 to the AC terminal 38 and thereby results in a voltage of +V_{DC}/2 being presented at the AC terminal 38.

Since the first DC terminal 34 and the AC terminal 38 share the same voltage of +V_{DC}/2, the voltage across the first limb portion 48 is near zero voltage. This therefore allows the switching elements 52 in the first limb portion 48 to be switched off at near zero voltage as shown in Figure 4B. At the same time the DC side chain-link converter 42 is controlled to provide a bi-directional current path and take over the duty of presenting a voltage of +V_{DC}/2 at the AC terminal 38 which is now disconnected from the first DC terminal 34 as a result of the reverse-parallel connected diodes 66 of the first limb portion 48 being reverse biased.

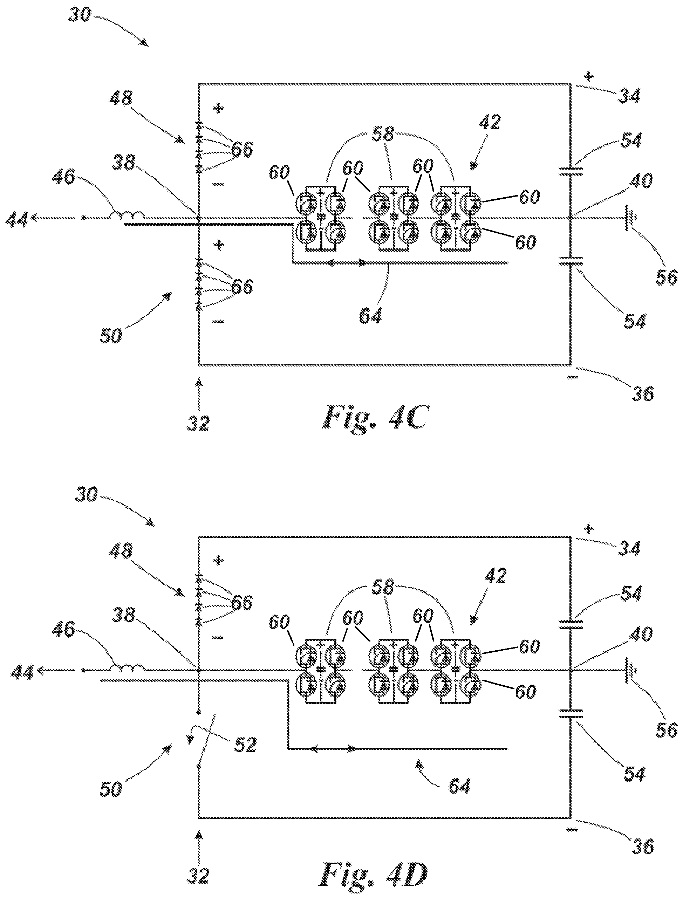

The voltage presented by the DC side chain-link converter 42 is then controlled to ramp in a negative direction by inserting modules 58 providing negative voltages and/or bypassing modules 58 providing positive voltages. This causes the voltage at the AC terminal 38 to ramp in a negative direction. The reverse-parallel connected diodes 66 of the first and second limb portions 48,50 remain reverse biased throughout the ramping process, as shown in Figure 4C which means that there is zero current flow in the first and second limb portions 48,50.

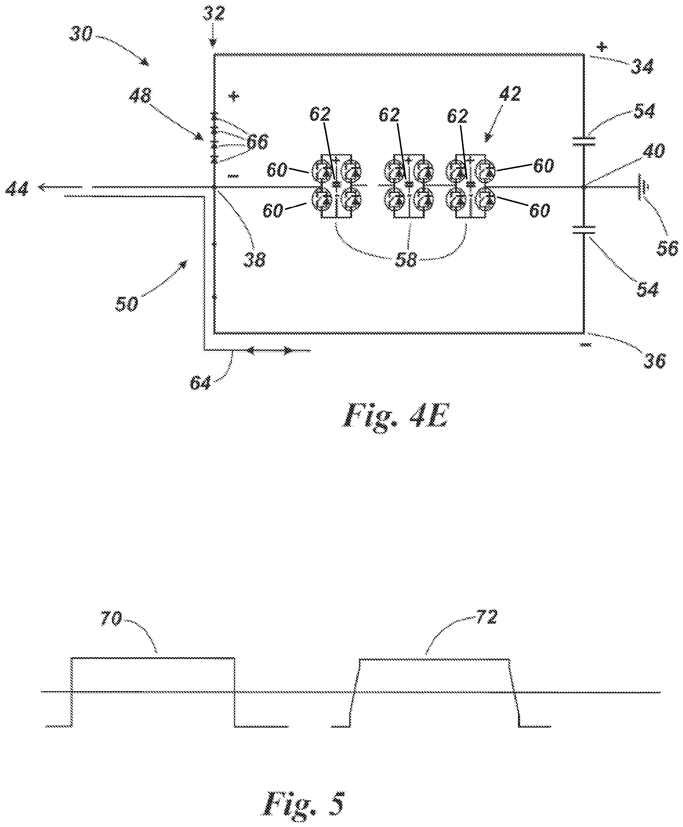

When the voltage at the AC terminal 38 reaches -V_{DC}/2, the second limb portion 50 is switched into circuit by closing the switching elements 52 in the second limb portion 50, as shown in Figure 4D. Since the second DC terminal 36 and the AC terminal 38 share the same voltage of -V_{DC}/2, the switching of the switching elements 52 of the second limb portion 50 occurs at near zero voltage. Current 64 is prevented from flowing into the first limb portion 48 as a result of the reverse-parallel connected diodes 66 of the first limb portion 48 being reverse-biased. The secondary switching elements 60 of the modules 58 of the DC side chain-link converter 42 are switched off and the DC side chain-link converter 42 provides a negative voltage that slightly exceeds -V_{DC}/2. This prevents a current 64 flowing through the DC side chain-link converter 42 by causing the reverse-parallel connected diodes of the secondary switching elements 60 to be reverse-biased. The switching of the second limb portion 50 into circuit connects the second DC terminal 36 to the AC terminal 38, as shown in Figure 4e, and thereby allows the second DC terminal 36 to take over the duty of presenting a voltage of -V_{DC}/2 at the AC terminal 38.

Switching the first and second limb portions 48,50 in and out of circuit therefore allows the voltage at the AC terminal 38 to commutate between +V_{DC}/2 and -V_{DC}/2. This results in the generation of a voltage waveform at the AC terminal 38. The shape of the voltage waveform can be adjusted by varying the periods in which each limb portion 48,50 is switched into or out of circuit.

The provision of the DC side chain-link converter 42 facilitates near zero voltage switching of the switching elements 52 of the limb portions 48,50 and thereby minimizes switching losses. In addition, the DC side chain-link converter 42 also allows control of the rate of change of voltage at the AC terminal 38 and thereby prevents the voltage at the AC terminal 38 from ramping too quickly between +V_{DC}/2 and -V_{DC}/2, as shown by the square waveform 70 of Figure 5. Using the DC side chain-link converter 42 to control the ramp of the voltage from +V_{DC}/2 and -V_{DC}/2 results in a trapezoidal waveform 72, as shown in Figure 5, which prevents the occurrence of fast and high voltage spikes which affect the design and rating of the switching elements 52. In addition, the voltage source converter 30 becomes easier to design and manufacture because the switching elements 52 can be chosen without having to consider the possibility of voltage levels exceeding the voltage ratings of the switching elements 52.

The effect of the ramp rate allows the DC side chain-link converter 42 to change the shape of the voltage waveform generated at the AC terminal 38. This can be additionally used to change the fundamental and harmonic components of the voltage waveform at the AC terminal 38 to control real and reactive power flow and harmonic components of current.

Since the DC side chain-link converter 42 is only required to conduct for short periods of time and to block current flow when either limb portion 48,50 is switched into circuit, the overall plant rating can be reduced by optimizing the DC side chain-link converter 42 for this specific task of controlling the rate of change of voltage at the AC terminal 38.

As shown in Figures 4A and 4E, the DC side chain-link converter 42 is connected in parallel with a DC link capacitor 54 when either limb portion 48,50 is switched into circuit. The parallel connection of the DC link capacitor 54 and the DC side chain-link converter 42 provides a mechanism for capacitor voltage balancing in the event that the voltage levels of the individual capacitors 62 are imbalanced.

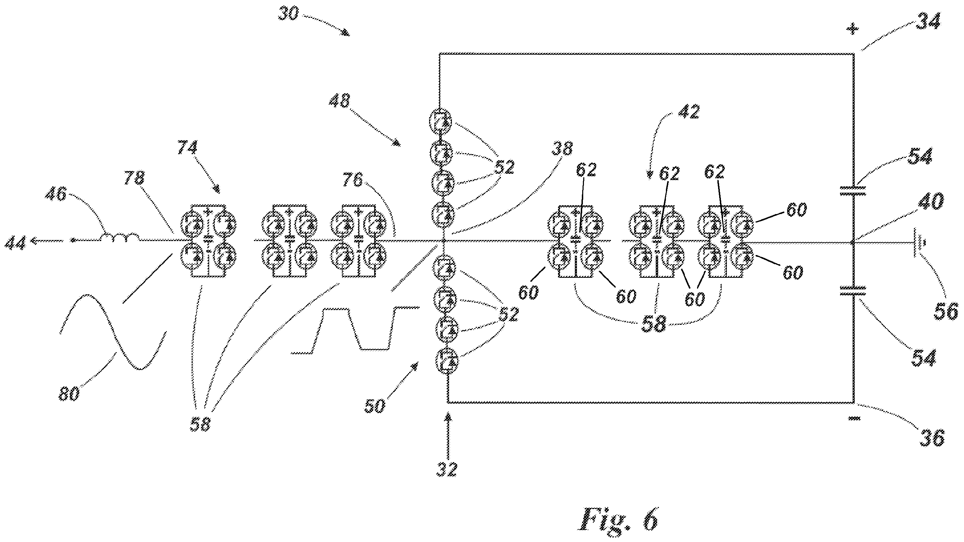

A voltage source converter 30 according to an embodiment is shown in Figure 6.

The voltage source converter 30 of the embodiment shown in Figure 2 further includes an AC side chain-link converter 74. The first end 76 of the AC side chain-link converter 74 is connected in series with the AC terminal 38 and the second end 78 of an AC side chain-link converter 74 is connected in use to an AC network 44 via an inductor 46. It is envisaged that in other embodiments the second end 78 of an AC side chain-link converter 74 may be connected in use to the AC network 44 via one or more transformers and/or one or more additional inductors 46.

The purpose of the AC side chain-link converter 74 is to modify the voltage waveform at the respective AC terminal 38 for presentation at the second end 78 of the AC side chain-link converter 74 to the connected AC network 44. The AC side chain-link converter 74 includes a chain of modules 58 connected in series, each module 58 including two pairs of secondary switching elements 60 connected in parallel with a capacitor 62 in a full-bridge arrangement to form a 4-quadrant bipolar module 58 that can provide positive, zero or negative voltage, and can conduct current in both directions.

The ability of 4-quadrant bipolar modules 58 to provide positive and negative voltages means that an AC side chain-link converter 74 employing 4-quadrant bipolar modules 58 can conduct alternating current and is thereby suited for modifying the voltage waveform at the AC terminal 38.

In Figure 6, the timing operations of the insertion and/or bypass of individual modules 58 of the AC side chain-link converter 74 are varied in order to generate a sinusoidal waveform 80 at the second end 78 of the AC side chain-link converter 74. Other waveform shapes may be generated by adjusting the timing of switching operations for each module 58 in the AC side chain-link converter 74.

The modification of the voltage waveform at the AC terminal 38 by the AC side chain-link converter 74 results in a smoothening of the positive and negative edges of the voltage waveforms. This leads to a further reduction of the rate of change of voltage which minimizes the possibility of high voltage spikes appearing at the interface between the AC side chain-link converter 74 and the AC network 44. The switching operations of the DC side and AC side chain-link converters 42,74 can be coordinated to provide an optimum rate of change of voltage while maintaining a preferred voltage waveform.

Since the AC side chain-link converter 74 is only required to develop small voltage differences to smooth the voltage edges of a trapezoidal waveform to form a sinusoidal waveform 80, the overall plant rating can be reduced by optimizing the AC side chain-link converter 74 for this specific task.

The voltage source converter 30 is suited for single-phase AC to DC voltage conversion.

Preferably for multiphase AC networks 44, the voltage source converter 30 includes multiple converter limbs 32, each converter limb 32 including an AC terminal 38 for connection in use to a phase of the multiphase AC network 44.

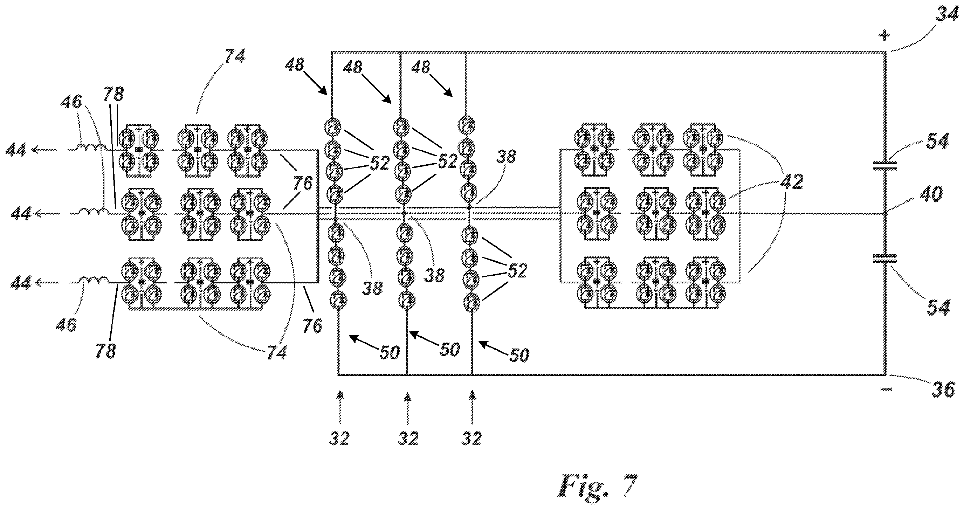

In Figure 7 the voltage source converter includes three converter limbs 32 including first and second DC terminals 34,36 and an AC terminal 38 for connection in use to a phase of a three-phase network. The three-phase voltage source converter also includes a third DC terminal 40, three DC side chain-link converters 42 and three AC side chain-link converters 74.

In use the first and second DC terminals 34,36 of each converter limb 32 are respectively connected to positive and negative terminals of a DC network so that the first DC terminal 34 of each converter limb 32 carries a voltage of +V_{DC}/2 and the second DC terminal 36 of each converter limb 32 carries a voltage of -V_{DC}/2.

Each converter limb 32 includes first and second limb portions 48,50, each limb portion 48,50 includes a plurality of switching elements 52 connected in series between a respective one of the first and second DC terminals 34,36 and the AC terminal 38. The switching elements 52 of the first and second limb portions 48,50 of the converter limbs 32 are operable to switch the respective limb portions 48,50 into and out of circuit to generate a three-phase voltage waveform.

In the embodiment of Figure 7, a pair of DC link capacitors 54 is connected in series between the first DC terminals 34 and the second DC terminals 36 of the converter limbs 32, a junction between the two DC link capacitors 54 defining the third DC terminal 40. The third DC terminal 40 may be connected in use to ground or may be left floating.

In respect of each converter limb 32, a first end of a DC side chain-link converter 42 is connected in series with an AC terminal 38 of the converter limb 32 and a second end of the DC side chain-link converter 42 is connected in series with the third DC terminal 40 such that the AC terminals 38 of the converter limbs 32 are connected to the third DC terminal 40 via separate DC side chain-link converters 42.

Similarly the AC terminal 38 of each converter limb 32 is connected to a first end 76 of a AC side chain-link converter 74 and the second end 78 of the AC side chain-link converter 74 is connected in use to a phase of the three-phase AC network 44 via an inductor 46 such that the AC terminals 38 of the converter limbs 32 are connected to different phases of the AC network 44 via separate AC side chain-link converters 74. It is envisaged that in other embodiments the second end 78 of each AC side chain-link converter 74 may also be connected in use to a phase of the three-phase AC network 44 via one or more transformers and/or one or more additional inductors 46.

In such a voltage source converter, the series connection of the switching elements 52 of each converter limb 32 and the chain-link converters connected to the respective AC terminal 38 operates independently of that of the other converter limbs 32 and therefore only affects the phase connected to the respective AC terminal 38, and has no influence on the phases connected to the AC terminals 38 of the other converter limbs 32. Control of the three-phase voltage source converter is therefore similar to the above-described control of the single-phase voltage source converter 30.

Each AC terminal 38 may be connected in use to a phase of the three-phase AC network 44 via one or more transformers and/or one or more additional inductors 46.

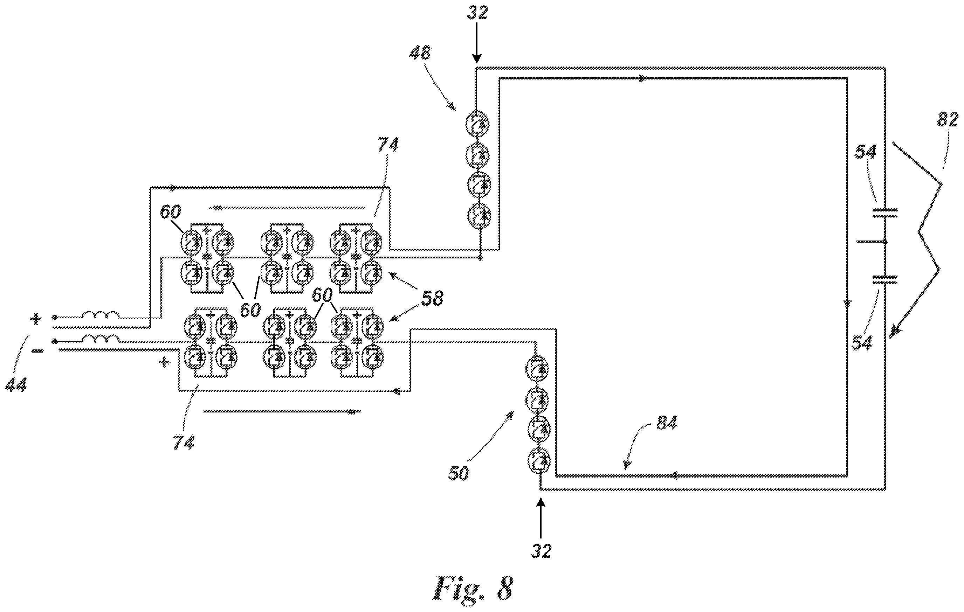

Preferably each AC side chain-link converter 74 is operable to generate a voltage to oppose the flow of current 84 created by a fault 82, in use, in the AC or DC networks. The fault limitation in response to a fault in the DC network is shown in Figure 8.

The modules 58 of the AC side chain-link converter 74 may be switched into circuit to provide the opposing voltage to extinguish the fault current 84 and thereby prevent damage to the voltage source converter components.

In the event of a fault 82 in the DC network resulting in high fault current 84 in the voltage source converter, the secondary switching elements 60 of each module 58 of one or more of the AC side chain-link converters 74 may be operated to insert the full-bridge modules 58 to provide a voltage which opposes the driving voltage of the non-faulty AC network and thereby reduces the fault current 84 in the voltage source converter.

For example, a short circuit occurring across the DC link capacitors 54 connected to the DC network results in both voltages at the positive and negative terminals dropping to zero volts. When this happens, a high fault current 84 can flow from the AC network 44 through the first limb portion 48 of the converter limb 32, and return to the AC network 44 through the short circuit and the second limb portion 50 of the converter limb 32.

The low impedance of the short circuit means that the fault current 84 flowing in the voltage source converter may exceed the current rating of the voltage source converter.

The fault current 84 may be minimized by opposing the driving voltage from the AC network 44. This is carried out by configuring the secondary switching elements 60 of each AC side chain-link module 58 such that the modules 58 are inserted into the respective AC side chain-link converter 74 to provide a voltage which opposes and thereby reduces the driving voltage.

In embodiments of the invention it is envisaged that the or each AC side chain-link converter 74, the or each DC side chain-link converter 42 and/or the or each switching element 52 of each limb portion 48,50 may be operable to generate a voltage to oppose the flow of current created by a fault in the AC network. In such embodiments the or each switching element 52 of each limb portion 48,50 may be operable to reduce the voltage at the AC terminal 38; the or each DC side chain-link converter 42 may be switched into and out of circuit to maintain soft-switching of the switching elements 52 of the limb portions 48,50 and/or the or each AC side chain-link converter 74 may be operable to clean up the fault current 84.

## Claims

1. A voltage source converter for use in high voltage DC power transmission and reactive power compensation
comprising at least one converter limb (32) including first and second DC terminals (34, 36) configured to be connected to a DC network, a third DC terminal (40) connected between the first and second DC terminals and an AC terminal (38) the or each converter limb defining first and second limb portions (48, 50), each limb portion including at least one switching element (52) connected in series between a respective one of the first and second DC terminals (34, 36) and the AC terminal (38), the or each converter limb (32) further including an AC side chain-link converter (74) including a plurality of modules (58) configured to be connected in series between the AC terminal (38) and an AC network (44), the AC side chain-link converter (74) being configured to modify the voltage waveform at the AC terminal (38) for presentation to the AC network (44),
**characterized in that** each converter limb (32) further comprises a DC side chain-link converter (42) including a plurality of modules (58) connected in series between the third DC terminal (40) and the AC terminal (38),
wherein the switching elements (52) of the first and second limb portions (48, 50) are configured to switch the DC side chain-link converter (42) into and out of circuit with each of the limb portions (48, 50) and thereby connect the DC side chain-link converter (42) into and out of circuit with the respective DC terminal (34, 36) to generate a voltage waveform at the AC terminal (38), the DC side chain-link converter (42) being configured to modify the voltage at the AC terminal (38).

2. A voltage source converter according to Claim 1 wherein the AC side chain-link converter (74) is configured to modify the voltage waveform at the AC terminal (38) to present a near approximation of a sinusoidal waveform to the AC network.

3. A voltage source converter according to Claim 1 or Claim 2 wherein the or each AC side chain-link converter (74) is configured to generate a voltage to oppose the flow of current created by a fault in the DC network.

4. A voltage source converter according to any of Claims 1 to 3 wherein the or each AC side chain-link converter (74), the or each DC side chain-link converter (42) and/or the or each switching element (52) of each limb portion (48, 50) are configured to generate a voltage to oppose the flow of current created by a fault in the AC network (44).

5. A voltage source converter according to Claim 1 wherein the third DC terminal (40) is configured to be connected to ground (56).

6. A voltage source converter according to Claim 1 further including at least one DC link capacitor (54) connected in series between the third DC terminal (40) and each of the first and second DC terminals (34, 36).

7. A voltage source converter according to any preceding claim wherein the DC side chain-link converter is configured to control the rate of change of voltage at the AC terminal (38) between switching of the DC side chain-link converter out of circuit with one of the limb portions and into circuit with the other of the limb portions.

8. A voltage source converter according to any preceding claim wherein the DC side chain-link converter (42) is configured to modify, prior to being switched out of circuit with one of the limb portions (48, 50) and into circuit with the other of the limb portions, the voltage at the AC terminal (38) so as to minimize the voltage across the other limb portion when the DC side chain-link converter is switched into circuit with the other limb portion.

9. A voltage source converter according to any preceding claim wherein the DC side chain-link converter (42) is configured to present, when switched into circuit with one of the limb portions (48, 50), a voltage across the limb portion to block current flow through the DC side chain-link converter.

10. A voltage source converter according to any preceding claim wherein each module (58) of the or each chain-link converter includes at least one pair of secondary switching elements (60) connected in parallel with an energy storage device (62), the secondary switching elements being operable so that the chain of modules defines a stepped variable voltage source.

11. A voltage source converter according to Claim 10 wherein each module (58) includes two pairs of secondary switching elements (60) connected in parallel with the respective energy storage device in a full-bridge arrangement to define a 4-quadrant bipolar module that can provide positive or negative voltage and can conduct current in both directions.

12. A voltage source converter according to Claim 10 or Claim 11 wherein the energy storage device (62) of each module is provided in the form of a capacitor, fuel cell, battery or an auxiliary AC generator with an associated rectifier.

13. A voltage source converter according any preceding claim wherein the or each switching element (52) of each limb portion (48, 50) includes at least one semiconductor device.

14. A voltage source converter according to any preceding claim wherein the or each chain-link converter includes at least two semiconductor devices.

15. A voltage source converter according to Claim 13 or Claim 14 wherein each semiconductor device is an insulated gate bipolar transistor, field-effect transistor, gate turn-off thyristor or integrated gate-commutated transistor.

16. A voltage source converter according to any preceding claim further comprising a plurality of converter limbs, each converter limb (32) including an AC terminal (38) configured to be connected to a phase of a multiphase AC network via said AC side chain-link converter (74).

## Patentansprüche

1. Spannungsquellenwandler zur Verwendung in der Hochspannungs-Gleichstromübertragung und Blindleistungskompensation umfassend zumindest ein Wandlerglied (32), das erste und zweite Gleichstromanschlüsse (34, 36), die konfiguriert sind, um mit einem Gleichstromnetz verbunden zu werden, einen dritten Gleichstromanschluss (40), der zwischen den ersten und zweiten Gleichstromanschlüssen verbunden ist, und einen Wechselstromanschluss (38) aufweist, wobei das oder jedes Wandlerglied erste und zweite Gliedabschnitte (48, 50) definiert, wobei jeder Gliedabschnitt zumindest ein Schaltelement (52) aufweist, das zwischen jeweils einem der ersten und zweiten Gleichstromanschlüsse (34, 36) und dem Wechselstromanschluss (38) in Reihe geschaltet ist,
wobei das oder jedes Wandlerglied (32) weiter einen Wechselstromseiten-Kettengliedwandler (74) aufweist, der eine Vielzahl von Modulen (58) aufweist, die konfiguriert sind, um zwischen dem Wechselstromanschluss (38) und einem Wechselstromnetz (44) in Reihe geschaltet zu werden, wobei der Wechselstromseiten-Kettengliedwandler (74) konfiguriert ist, um die Spannungsform an dem Wechselstromanschluss (38) zur Präsentation an das Wechselstromnetz (44) zu modifizieren, **dadurch gekennzeichnet, dass** jedes Wandlerglied (32) weiter einen Gleichstromseiten-Kettengliedwandler (42) umfasst, der eine Vielzahl von Modulen (58) aufweist, die zwischen dem dritten Gleichstromschluss (40) und dem Wechselstromschluss (38) in Reihe geschaltet sind, wobei die Schaltelemente (52) der ersten und zweiten Gliedabschnitte (48, 50) konfiguriert sind, um den Gleichstromseiten-Kettengliedwandler (42) in und aus einem Stromkreis mit jedem der Gliedabschnitte (48, 50) zu schalten und dabei den Gleichstromseiten-Kettengliedwandler (42) in und aus einem Stromkreis mit dem jeweiligen Gleichstromanschluss (34, 36) zu verbinden, um eine Spannungsform an dem Wechselstromanschluss (38) zu erzeugen, wobei der Gleichstromseiten-Kettengliedwandler (42) konfiguriert ist, um die Spannung an dem Wechselstromanschluss (38) zu modifizieren.

2. Spannungsquellenwandler nach Anspruch 1, wobei der Wechselstromseiten-Kettengliedwandler (74) konfiguriert ist, um die Spannungsform an dem Wechselstromanschluss (38) zu modifizieren, um eine nahe Annäherung einer sinusförmigen Wellenform an das Wechselstromnetz zu präsentieren.

3. Spannungsquellenwandler nach Anspruch 1 oder Anspruch 2, wobei der oder jeder Wechselstromseiten-Kettengliedwandler (74) konfiguriert ist, um eine Spannung zu erzeugen, um dem Stromfluss entgegenzuwirken, der durch eine Störung in dem Gleichstromnetz entsteht.

4. Spannungsquellenwandler nach einem der Ansprüche 1 bis 3, wobei der oder jeder Wechselstromseiten-Kettengliedwandler (74), der oder jeder Gleichstromseiten-Kettengliedwandler (42) und/oder das oder jedes Schaltelement (52) jedes Gliedabschnitts (48, 50) konfiguriert sind, um eine Spannung zu erzeugen, um dem Stromfluss entgegenzuwirken, der durch eine Störung in dem Gleichstromnetz (44) entsteht.

5. Spannungsquellenwandler nach Anspruch 1, wobei der dritte Gleichstromanschluss (40) konfiguriert ist, um mit der Masse (56) verbunden zu werden.

6. Spannungsquellenwandler nach Anspruch 1, weiter aufweisend zumindest einen Gleichstrom-Zwischenkreiskondensator (54), der zwischen dem dritten Gleichstromanschluss (40) und jedem von den ersten und zweiten Gleichstromanschlüssen (34, 36) in Reihe geschaltet ist.

7. Spannungsquellenwandler nach einem vorstehenden Anspruch, wobei der Gleichstromseiten-Kettengliedwandler konfiguriert ist, um die Änderungsrate der Spannung an dem Wechselstromanschluss (38) zwischen Schalten des Gleichstromseiten-Kettengliedwandlers aus einem Stromkreis mit einem der Gliedabschnitte und in einen Stromkreis mit dem anderen der Gliedabschnitte zu steuern.

8. Spannungsquellenwandler nach einem vorstehenden Anspruch, wobei der Gleichstromseiten-Kettengliedwandler (42) konfiguriert ist, bevor er aus einem Stromkreis mit einem der Gliedabschnitte (48, 50) und in einen Stromkreis mit dem anderen der Gliedabschnitte geschaltet wird, die Spannung an dem Wechselstromanschluss (38) zu modifizieren, um die Spannung über dem anderen Gliedabschnitt zu minimieren, wenn der Gleichstromseiten-Kettengliedwandler in einen Stromkreis mit dem anderen Gliedabschnitt geschaltet wird.

9. Spannungsquellenwandler nach einem vorstehenden Anspruch, wobei der Gleichstromseiten-Kettengliedwandler (42) konfiguriert ist, um, wenn in einen Stromkreis mit einem der Gliedabschnitte (48, 50) geschaltet, eine Spannung über dem Gliedabschnitt zu präsentieren, um Stromfluss durch den Gleichstromseiten-Kettengliedwandler zu blockieren.

10. Spannungsquellenwandler nach einem vorstehenden Anspruch, wobei jedes Modul (58) von dem oder jedem Kettengliedwandler zumindest ein Paar von sekundären Schaltelementen (60) aufweist, die mit einer Energiespeichervorrichtung (62) parallel geschaltet sind, wobei die sekundären Schaltelemente betriebsbereit sind, so dass die Kette von Modulen eine abgestufte variable Spannungsquelle definiert.

11. Spannungsquellenwandler nach Anspruch 10, wobei jedes Modul (58) zwei Paare von sekundären Schaltelementen (60) aufweist, die mit der entsprechenden Energiespeichervorrichtung in einer Vollbrückenanordnung parallel geschaltet sind, um ein 4-Quadranten-Bipolarmodul zu definieren, das positive oder negative Spannung bereitstellen kann und Strom in beiden Richtungen leiten kann.

12. Spannungsquellenwandler nach Anspruch 10 oder Anspruch 11, wobei die Energiespeichervorrichtung (62) jedes Moduls in der Form eines Kondensators, einer Brennstoffzelle, einer Batterie oder eines Hilfswechselstromgenerators mit einem zugehörigen Gleichrichter bereitgestellt ist.

13. Spannungsquellenwandler nach einem vorstehenden Anspruch, wobei das oder jedes Schaltelement (52) jedes Gliedabschnitts (48, 50) zumindest eine Halbleitervorrichtung aufweist.

14. Spannungsquellenwandler nach einem vorstehenden Anspruch, wobei der oder jeder Kettengliedwandler zumindest zwei Halbleitervorrichtungen aufweist.

15. Spannungsquellenwandler nach Anspruch 13 oder Anspruch 14, wobei jede Halbleitervorrichtung ein Bipolartransistor mit isoliertem Gate, Feldeffekttransistor, Gate-Abschalt-Thyristor oder integrierter Gate-kommutierter Transistor ist.

16. Spannungsquellenwandler nach einem vorstehenden Anspruch, weiter umfassend eine Vielzahl von Wandlergliedern, wobei jedes Wandlerglied (32) einen Wechselstromanschluss (38) aufweist, der konfiguriert ist, um über den Wechselstromseiten-Kettengliedwandler (74) mit einer Phase eines mehrphasigen Wechselstromnetzes verbunden zu werden.

## Revendications

1. Convertisseur de source de tension pour utilisation dans la transmission de courant continu haute tension et la compensation de puissance réactive
comprenant au moins une branche de convertisseur (32) comprenant des première et deuxième bornes CC (34, 36) configurées pour être connectées à un réseau CC, une troisième borne CC (40) connectée entre les première et deuxième bornes CC et une borne CA (38),
la ou chaque branche de convertisseur définissant des première et seconde parties de branche (48, 50), chaque partie de branche comprenant au moins un élément de commutation (52) connecté en série entre une borne respective des première et deuxième bornes CC (34, 36) et la borne CA (38),
la ou chaque branche de convertisseur (32) comprenant en outre un convertisseur à cellules connectées en chaînes côté CA (74) comprenant une pluralité de modules (58) configurés pour être connectés en série entre la borne CA (38) et un réseau CA (44), le convertisseur à cellules connectées en chaînes côté CA (74) étant configuré pour modifier la forme d'onde au niveau de la borne CA (38) en vue de sa présentation au réseau CA (44),
**caractérisé en ce que** chaque branche de convertisseur (32) comprend en outre un convertisseur à cellules connectées en chaînes côté CC (42) comprenant une pluralité de modules (58) connectés en série entre la troisième borne CC (40) et la borne CA (38),
dans lequel les éléments de commutation (52) des première et seconde parties de branche (48, 50) sont configurés pour commuter le convertisseur à cellules connectées en chaînes côté CC (42) en et hors circuit avec chacune des parties de branche (48, 50) et ainsi connecter le convertisseur à cellules connectées en chaînes côté CC (42) en et hors circuit avec la borne CC (34, 36) respective afin de générer une forme d'onde de tension au niveau de la borne CA (38), le convertisseur à cellules connectées en chaînes côté CC (42) étant configuré pour modifier la tension au niveau de la borne CA (38).

2. Convertisseur de source de tension selon la revendication 1, dans lequel le convertisseur à cellules connectées en chaînes côté CA (74) est configuré pour modifier la forme d'onde de tension au niveau de la borne CA (38) afin de présenter une quasi-approximation d'une forme d'onde sinusoïdale au réseau CA.

3. Convertisseur de source de tension selon la revendication 1 ou la revendication 2, dans lequel le ou chaque convertisseur à cellules connectées en chaînes côté CA (74) est configuré pour générer une tension afin de s'opposer au flux de courant créé par une défaillance dans le réseau CC.

4. Convertisseur de source de tension selon l'une quelconque des revendications 1 à 3, dans lequel le ou chaque convertisseur à cellules connectées en chaînes côté CA (74), le ou chaque convertisseur à cellules connectées en chaînes côté CC (42) et/ou le ou chaque élément de commutation (52) de chaque partie de branche (48, 50) sont configurés pour générer une tension afin de s'opposer au flux de courant créé par une défaillance dans le réseau CA (44).

5. Convertisseur de source de tension selon la revendication 1, dans lequel la troisième borne CC (40) est configurée pour être connectée à la masse (56).

6. Convertisseur de source de tension selon la revendication 1, comprenant en outre au moins un condensateur de connexion CC (54) connecté en série entre la troisième borne CC (40) et chacune des première et deuxième bornes CC (34, 36).

7. Convertisseur de source de tension selon l'une quelconque des revendications précédentes, dans lequel le convertisseur à cellules connectées en chaînes côté CC est configuré pour contrôler le taux de variation de la tension au niveau de la borne CA (38) entre la commutation du convertisseur à cellules connectées en chaînes côté CC hors circuit avec l'une des parties de branche et en circuit avec l'autre des parties de branche.

8. Convertisseur de source de tension selon l'une quelconque des revendications précédentes, dans lequel le convertisseur à cellules connectées en chaînes côté CC (42) est configuré pour modifier, avant d'être commuté hors circuit avec l'une des parties de branche (48, 50) et en circuit avec l'autre des parties de branche, la tension à la borne CA (38) afin de minimiser la tension à travers l'autre partie de branche lorsque le convertisseur à cellules connectées en chaînes côté CC est commuté en circuit avec l'autre partie de branche.

9. Convertisseur de source de tension selon l'une quelconque des revendications précédentes, dans lequel le convertisseur à cellules connectées en chaînes côté CC (42) est configuré pour présenter, lorsqu'il est commuté en circuit avec l'une des parties de branche (48, 50), une tension à travers la partie de branche afin de bloquer le flux de courant à travers le convertisseur à cellules connectées en chaînes côté CC.

10. Convertisseur de source de tension selon l'une quelconque des revendications précédentes, dans lequel chaque module (58) du ou de chaque convertisseur à cellules connectées en chaînes comprend au moins une paire d'éléments de commutation secondaires (60) connectés en parallèle avec un dispositif de stockage d'énergie (62), les éléments de commutation secondaires étant actionnables afin que la chaîne de modules définisse une source de tension variable par paliers.

11. Convertisseur de source de tension selon la revendication 10, dans lequel chaque module (58) comprend deux paires d'éléments de commutation secondaires (60) connectés en parallèle avec le dispositif de stockage d'énergie respectif selon un agencement en pont complet afin de définir un module bipolaire à quatre quadrants qui peut fournir une tension positive ou négative et peut conduire le courant dans les deux directions.

12. Convertisseur de source de tension selon la revendication 10 ou la revendication 11, dans lequel le dispositif de stockage d'énergie (62) de chaque module est prévu sous la forme d'un condensateur, d'une pile à combustible, d'une batterie ou d'un générateur CA auxiliaire avec un redresseur associé.

13. Convertisseur de source de tension selon l'une quelconque des revendications précédentes, dans lequel le ou chaque élément de commutation (52) de chaque partie de branche (48, 50) comprend au moins un dispositif à semiconducteur.

14. Convertisseur de source de tension selon l'une quelconque des revendications précédentes, dans lequel le ou chaque convertisseur à cellules connectées en chaînes comprend au moins deux dispositifs à semiconducteur.

15. Convertisseur de source de tension selon la revendication 13 ou la revendication 14, dans lequel chaque dispositif à semiconducteur est un transistor bipolaire à grille isolée, un transistor à effet de champ, un thyristor blocable ou un transistor commuté à gâchette intégrée.

16. Convertisseur de source de tension selon l'une quelconque des revendications précédentes, comprenant en outre une pluralité de branches de convertisseur, chaque branche de convertisseur (32) comprenant une borne CA (38) configurée pour être connectée à une phase d'un réseau CA multiphasé par l'intermédiaire dudit convertisseur à cellules connectées en chaînes côté CA (74).
